Europäisches Patentamt

European Patent Office

Office européen des brevets

(19)

(11) Veröffentlichungsnummer: **0 213 267 B1**

# (12) EUROPÄISCHE PATENTSCHRIFT

(45) Veröffentlichungstag der Patentschrift:
23.01.91 Patentblatt 91/04

(51) Int. Cl.⁵: **G01D 5/20**, B60G 17/00

(21) Anmeldenummer: **86103532.7**

(22) Anmeldetag: **15.03.86**

(54) **Wegsensor.**

(30) Priorität: **20.06.85 DE 3522010**

(43) Veröffentlichungstag der Anmeldung:
**11.03.87 Patentblatt 87/11**

(45) Bekanntmachung des Hinweises auf die
Patenterteilung:
**23.01.91 Patentblatt 91/04**

(84) Benannte Vertragsstaaten:
**DE FR GB IT SE**

(56) Entgegenhaltungen:
**DE-B- 1 555 636**
**GB-A- 1 133 249**
**US-A- 3 160 836**
**US-A- 3 910 594**
**US-A- 4 056 044**

(73) Patentinhaber: **WABCO Westinghouse**
**Fahrzeugbremsen GmbH**
**Am Lindener Hafen 21 Postfach 91 12 80**
**D-3000 Hannover 91 (DE)**

(72) Erfinder: **Rodriguez, José Antonio**
**Melanchtonstrasse 21**
**D-3008 Garbsen 4 (DE)**

(74) Vertreter: **Schrödter, Manfred**
**WABCO Westinghouse Fahrzeugbremsen**
**GmbH Am Lindener Hafen 21 Postfach 91 12**
**80**
**D-3000 Hannover 91 (DE)**

## Beschreibung

Die Erfindung betrifft einen Wegsensor gemäß dem Oberbegriff des Patentanspruchs 1.

Ein derartiger Wegsensor kann zum Beispiel bei einem luftgefederten Fahrzeug, welches mit einer Einrichtung zur Niveauregulierung ausgestattet ist, eingesetzt werden, um Änderungen des Abstandes zwischen Fahrzeugchassis und Fahrzeugachse festzustellen. In Abhängigkeit von den Sensorsignalen wird mittels einer Steuerventileinrichtung der Druck in den Luftfederbälgen des Fahrzeugs geregelt.

Es ist ein Wegsensor bekannt (Gerät Nr. 441 100 010 0 der Firma WABCO Westinghouse Fahrzeugbremsen GmbH), der sich aus einer Spule, einem relativ zur Spule bewegbar angeordneten Kern sowie einem zur Betätigung für den Kern dienenden Stößel zusammensetzt. Als Betätigungseinrichtung für den Wegsensor ist eine mit einer Kurvenscheibe oder einem Nocken versehene Welle vorgesehen, die einerseits an einem Fahrzeugteil (Rahmen oder Achse) angeordnet ist und andererseits mit dem aus dem Wegsensor herausgeführten freien Ende des Stößels in Wirkverbindung steht. Bei einer Verdrehbewegung der Welle wird der Kern mittels des Stößels in Richtung auf die Spule zu bzw. von der Spule weg bewegt. Der Kern taucht dabei mehr oder weniger tief in einen hülsenförmigen Spulenträger ein.

Um eine gute und genaue Signalerzeugung zu gewährleisten, ist es erforderlich, den Kern und den hülsenförmigen Spulenträger mit sehr engen Toleranzen zu fertigen.

Bei dem bekannten Wegsensor kann es trotz präziser Fertigung unter ungünstigen Umständen passieren, daß die Bewegung des Stößels und auch des Kerns gehemmt wird. Zudem ist es denkbar, daß bei eng tolerierten Bauteilen, die für eine genaue Sensierung nötig sind, (hülsenförmiger Spulenträger, Stößel und Führung für den Stößel) relativ hohe Reibungskräfte entstehen.

Der Erfindung liegt deshalb die Aufgabe zugrunde, einen Wegsensor der eingangs genannten Art zu schaffen, dessen Antrieb so ausgebildet ist, daß die Bewegung des Antriebs und des Kerns störungsfrei erfolgt.

Diese Aufgabe wird mit der im Patentanspruch 1 angegebenen Erfindung gelöst. Weiterbildungen und vorteilhafte Ausgestaltungen der Erfindung sind in den abhängigen Ansprüchen angegeben.

Die Erfindung bietet insbesondere den Vorteil, durch die Verwendung eines mit einem Pleuel versehenen Kurbeltriebes als Antrieb für den Kern sowie einer Gelenkverbindung zwischen, Führungsteil und Pleuel, den Kern frei von Querkräften zu halten. Vom Kurbeltrieb werden lediglich in Richtung der Längsachse des Kerns auftretende Kräfte auf den Kern übertragen. Die vom Kurbeltrieb erzeugten Querkräfte werden vom Führungsteil aufgenommen, da sich der Pleuel am Führungsteil abstützt. Durch die vorstehend genannten Maßnahmen werden die Reibungskräfte zwischen den einzelnen Bauteilen erheblich reduziert. Ein Verkanten der Führung oder auch des Kerns wird wirksam verhindert, so daß der erfindungsgemäße Wegsensor feinfühlig anspricht.

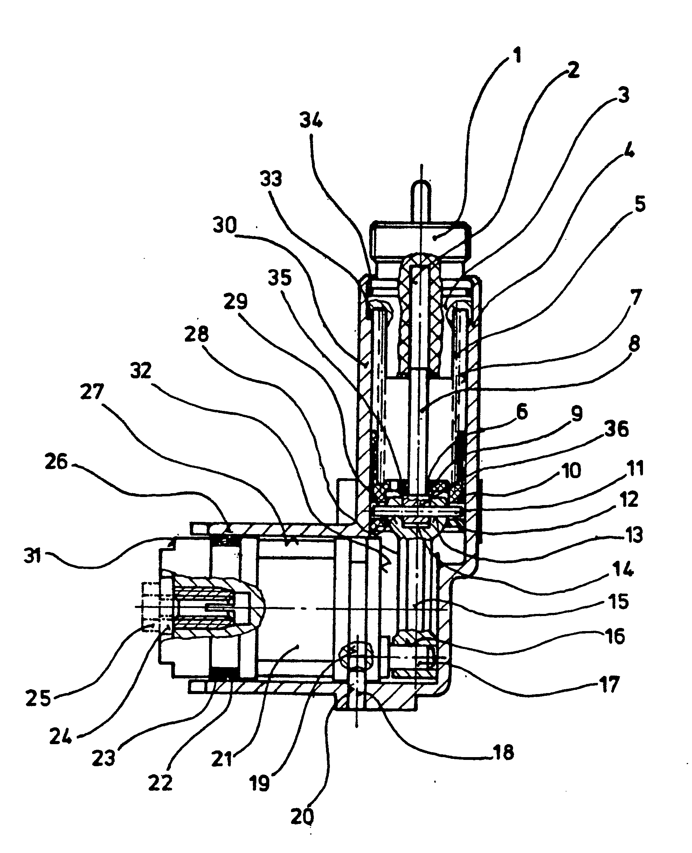

Anhand der Zeichnung wird nachstehend ein Ausführungsbeispiel der Erfindung näher erläutert.

Die Abbildung zeigt einen Wegsensor mit einem als Antrieb für den Kern dienenden Kurbeltrieb sowie einem Führungsteil, welches eine für den Kern und den Pleuel des Kurbeltriebes gemeinsame Gelenkstelle aufweist.

In der Abbildung ist das Gehäuse 26, 30 eines Wegsensors dargestellt, welches eine erste Gehäuseausnehmung 27 und eine zweite Gehäuseausnehmung 7 aufweist. Die Gehäuseausnehmungen 27, 7 sind in etwa rechtwinklig zueinander angeordnet und gehen ineinander über. In der ersten Gehäuseausnehmung 27 ist ein eine Einschnürung aufweisender rotationssymmetrischer Körper 21 um seine Längsachse drehbar gelagert. An der innerhalb des Gehäuses 26, 30 liegenden Stirnseite 32 des rotationssymmetrischen Körpers 21 ist exzentrisch ein Zapfen 17 angeordnet, auf welchem ein als Pleuel 15 ausgebildeter Hebel mit seinem Lagerauge 16 verschwenkbar gelagert ist. An der dem Gehäuseinneren abgewandten Stirnseite 31 des rotationssymmetrischen Körpers 21 ist z.B. ein Hebel 24 mittels einer Schraube 25 befestigt. Der rotationssymmetrische Körper 21 mit dem exzentrisch angeordneten Zapfen 17 sowie der als Pleuel 15 dienende Hebel bilden einen Kurbeltrieb zur Betätigung des relativ zu einer Spule 3 verschiebbaren Kerns 8. Der Kern 8 ist mit seinem einen ein Lagerauge 36 aufweisenden Ende auf einer Achse 11 gelagert, die quer zur Längsachse des Pleuels 15 am gabelförmig ausgebildeten freien Ende des Pleuels 15 angeordnet ist. Die Achse 11 ist in ihrer Länge so bemessen, daß sie zu beiden Seiten des gabelförmig ausgebildeten Teiles des Pleuels 15 ein Stück aus den im gabelförmigen Teil des Pleuels 15 vorgesehenen Lagerstellen 13, 28 für die Achse 11 herausragt. Die aus den Lagerstellen 13, 28 herausragenden freien Enden der Achse 11 sind in einem Führungsteil 10 gelagert, welches in der quer zur Längsachse der ersten Gehäuseausnehmung 27 verlaufenden zweiten Gehäuseausnehmung 7 in Richtung der Längsachse der zweiten Gehäuseausnehmung 7 verschiebbar angeordnet ist. Die im Führungsteil 10 vorgesehenen Lagerstellen 12, 29 für die Achse 11 sind schlitzartig ausgebildet. Die schlitzartigen Lagerstellen 12, 29 weisen die Form von sich in Richtung der Längsachse des Führungsteiles 10 verlaufenden Langlöchern auf, welche so bemessen sind, daß die Achse 11 lediglich an den parallel zur Längsachse des Führungsteiles 10 verlaufenden die Langlöcher begrenzenden Wandungen anliegt. An der dem Pleuel 15 zugewandten Seite des Führungsteiles 10 ist ein eine Durchführung 6 für den Kern 8 begrenzender umlaufender Vorsprung 35 vorgesehen mit welchem das Führungsteil 10 auf dem Lagerauge 36 des Kerns 8 aufliegt. Der umlaufende Vorsprung 35 ist so bemessen, daß ein vorbestimmbarer Abstand der Achse 11 zu der oberen und unteren Begrenzung der Langlöcher eingehalten wird. In der das Führungsteil 10, 12, 29 beinhaltenden Gehäuseausnehmung 7 ist ein hülsenförmiger Spulenträger 2 mit Spule 3 koaxial zum Kern 8 derart angeordnet, daß der Kern 8 in den Spulenträger 2 eintaucht. Der Spulenträger 2 weist auf seinem Umfang einen umlaufenden Vorsprung 33 auf, der auf einer Abstufung 4 der die Gehäuseausnehmung 7 begrenzenden Wandung aufliegt. Mittels eines Dichtringes 34 ist die Gehäuseausnehmung 7 gegen die Atmosphäre abgedichtet.

Die Spule 3 weist ein aus der Gehäuseausnehmung 7 herausgeführtes Steckerteil 1 auf. Eine sich am umlaufenden Vorsprung 33 des Spulenträgers 2 abstützende Feder 5 beaufschlagt das Führungsteil 10, 12, 29 in Richtung auf den Pleuel 15 zu, so daß das Führungsteil 10, 12, 29 in ständigem Kontakt mit dem Lagerauge 36 des Kerns 8 gehalten wird. In einer in der Mantelfläche des rotationssymmetrischen Körpers 21 angeordneten Nut 23 ist ein Dichtring 22 gelagert, der dichtend an der die erste Gehäuseausnehmung 27 begrenzenden Wandung anliegt. In dem Teil 26 des Gehäuses 26, 30 ist eine sich auf den Umfang des rotationssymmetrischen Körpers 21 zu erstreckende Bohrung 20 zur Aufnahme eines Sicherungsstiftes 18 vorgesehen. Der Sicherungsstift 18 greift in eine auf dem Umfang des rotationssymmetrischen Körpers 21 angeordnete nutartige umlaufende Ausnehmung 19 ein, wodurch der rotationssymmetrische Körper 21 gegen Verschieben in Richtung der Längsachse der ersten Gehäuseausnehmung gesichert ist.

Wird bei einer Drehbewegung des rotationssymmetrischen Körpers 21 mittels des Hebels 24 der mit dem Zapfen 17 gelenkig verbundene Pleuel 15 in der Weise veschwenkt, daß der Pleuel 15 eine Bewegung in Richtung auf die Spule 3 zu ausführt, so werden der mit dem Pleuel 15 über die Achse 11 in Verbindung stehende Kern 8 sowie das auf dem Lagerauge 36 des Kerns 8 aufliegende Führungsteil 10, 12, 29 gegen die Kraft der Feder 5 in Richtung auf die Spule 3 zu bewegt. Die bei der Verschwenkbewegung des Pleuels 15 auftretenden Querkräfte werden dabei von dem Führungsteil 10, 12, 29 aufgenommen, so daß der über die Achse 11 mit dem gabelförmigen Teil des Pleuels 15 gelenkig verbundene Kern 8 von diesen Querkräften nicht belastet wird. Da der Kern 8 bei diesem Vorgang nicht gegen die Wandung des hülsenförmigen Spulenträgers 2 gedrückt wird, kann er reibungsarm im Spulenträger 2 gleiten. Die direkte Verbindung des Pleuels 15 mit dem Kern 8 über die Achse 11 gewährleistet Spielfreiheit zwischen Kern 8 und Pleuel 15 in Richtung der Längsachse von Kern 8 und Pleuel 15.

Es ist auch möglich, den Pleuel 15 an seinem mit dem Kern 8 verbundenen Endbereich halbkugelförmig auszubilden und im Führungsteil 10 eine schalenförmige Lagerstelle für das halbkugelförmige Teil des Pleuels 15 vorzusehen. Bei einer solchen Ausbildung der Verbindung zwischen Pleuel 15 und dem Führungsteil 10 kann auf eine Verlängerung der Achse 11 und somit auch auf eine Lagerung der Achse 11 im Führungsteil 10 verzichtet werden.

Soll die den Pleuel 15 mit dem Kern 8 verbindende Achse jedoch im Führungsteil 10 gelagert werden, so ist es auch denkbar, die schlitzförmige Lagerung 12, 29 im Führungsteil 10 für die Achse 11 so auszubilden, daß die Achse 11 in die schlitzförmige Lagerung 12, 29 einschnappt. In diesem Falle kann auf die Feder 5 verzichtet werden, da bei einem Hub des Pleuels 15 in Richtung von der Spule 3 weg das Führungsteil 10 von der Achse 11 mitgenommen wird.

Es ist auch möglich, das Führungsteil (10) und den Pleuel (15) über eine Gelenkstelle (Achse oder Kugelgelenk) miteinander zu verbinden und den Kern (8) in Richtung auf das Führungsteil (10) zu federbelastet am Führungsteil (10) zur Anlage zu bringen. In einem solchen Fall ist eine direkte Verbindung zwischen Pleuel (15) und Kern (8) mittels einer Achse nicht erforderlich. Der Kern (8) kann dabei zur besseren Führung in einer Ausnehmung (9) des Führungsteiles (10) gelagert sein.

**Ansprüche**

1. Wegsensor mit einer Spule (3), einem relativ zur Spule (3) bewegbar angeordneten Kern (8), der in einen von der Spule (3) umgebenen Raum bzw. in einen Spulenträger (2) eintaucht, sowie mit einer Betätigungseinrichtung für den Kern (8), mittels welcher der Kern (8) in Abhängigkeit von der Drehbewegung einer Welle in Richtung seiner Längsachse bewegt wird, wobei die Betätigungseinrichtung einerseits mit der Welle und andererseits mit dem Kern in Wirkverbindung steht, gekennzeichnet durch die folgenden Merkmale :

a) als Betätigungseinrichtung für den Kern (8) dient ein Kurbeltrieb (21, 17, 15), der ein nach Art eines Pleuels (15) wirkendes Teil aufweist ;

b) es ist ein beweglich angeordnetes Führungsteil (10) vorgesehen, welches über eine Gelenkstelle mit dem Kurbeltrieb (21, 17, 15) in Wirkverbindung steht ;

c) das Führungsteil (10) wird in einer Gehäuseausnehmung (7) des Wegsensors geführt ;

d) der Kern (8) und das Führungsteil (10) stehen derart in Wirkverbindung, daß der Kern (8) vom Führungsteil (10) oder von der Gelenkstelle in Richtung seiner Längsachse bewegbar ist.

2. Wegsensor nach Anspruch 1, dadurch gekennzeichnet, daß als Gelenkstelle zwischen Führungsteil (10) und dem nach Art eines Pleuels (15) wirkenden Teil des Kurbeltriebes (21, 17, 15) eine Achse (11) dient, die im Führungsteil (10) gelagert ist.

3. Wegsensor nach Anspruch 2, dadurch gekennzeichnet, daß der Kern (8) und das nach Art eines Pleuels (15) wirkende Teil des Kurbeltriebes (21, 17, 15) über die Achse (11) gelenkig miteinander verbunden sind.

4. Wegsensor nach wenigstens einem der vorhergehenden Ansprüche, dadurch gekennzeichnet, daß das Führungsteil (10) eine in Richtung der Längsachse des Kerns (8) verlaufende Ausnehmung (9) zur Aufnahme des Kerns (8) aufweist.

5. Wegsensor nach Anspruch 1, dadurch gekennzeichnet, daß der Kurbeltrieb aus einem rotationssymmetrischen Körper (21), einem an der innerhalb des Gehäuses des Wegsensors gelegenen Stirnseite (32) des rotationssymmetrischen Körpers (21) exzentrisch angeordneten Zapfen (17) und einem verschwenkbar auf dem Zapfen (17) gelagerten Pleuel (15) besteht.

6. Wegsensor nach Anspruch 3, gekennzeichnet durch die folgenden Merkmale :
   a) sowohl das eine Ende des Pleuels (15) als auch das dem Pleuel (15) zugewandte Ende des Kerns (8) sind auf der den Kern (8) mit dem Pleuel (15) verbindenden Achse (11) verschwenkbar gelagert ;
   b) im oder am Führungsteil (10) sind zwei Lagerstellen (12, 29) zur Lagerung der quer zur Längsachse des Pleuels (15) bzw. des Kerns (8) angeordneten Achse (11) vorgesehen.

7. Wegsensor nach wenigstens einem der vorhergehenden Ansprüche 2, 3 oder 6, dadurch gekennzeichnet, daß die Lagerstellen (12, 29) für die Achse (11) als in Richtung der Längsachse des Führungsteils (10) verlaufende schlitzförmige Ausnehmungen ausgebildet sind.

8. Wegsensor nach wenigstens einem der vorhergehenden Ansprüche 2, 3 oder 6, dadurch gekennzeichnet, daß eine Feder (5) vorgesehen ist, welche das Führungsteil (10) in Richtung auf die Achse (11) zu beaufschlagt.

9. Wegsensor nach Anspruch 1, dadurch gekennzeichnet, daß das Führungsteil (10) auf seiner dem Pleuel (15) zugewandten Seite einen Vorsprung (35) aufweist, welcher auf einem als Lagerauge (36) ausgebildeten Teil des Kerns (8) aufliegt.

10. Wegsensor nach wenigstens einem der vorhergehenden Ansprüche, dadurch gekennzeichnet, daß das dem Führungsteil (10) zugewandte Ende des Pleuels (15) kugelförmig ausgebildet ist und als Lager für das kugelförmig ausgebildete Teil des Pleuels (15) eine schalenförmige Ausnehmung im Führungsteil (10) vorgesehen ist.

11. Wegsensor nach Anspruch 1, gekennzeichnet durch die folgenden Merkmale :
   a) das Führungsteil (10) steht mit dem Pleuel (15) über eine Gelenkstelle in Wirkverbindung ;
   b) der Kern (8) liegt mit seinem dem Führungsteil zugewandten Ende auf dem Führungsteil (10) auf und wird von einer Feder in Richtung auf das Führungsteil (10) zu belastet.

**Claims**

1. A displacement sensor with a coil (3), a core (8) arranged so as to be movable relative to the coil (3), which core is received into a space surrounded by the coil (3) or in a coil carrier (2), and with an actuating arrangement for the core (8) by means of which the core (8) is moved as a function of the rotational movement of a shaft in the direction of its longitudinal axis, the actuating arrangement being in operative connection on the one hand with the shaft and on the other hand with the core, characterized by the following features :
   a) a crank drive (21, 17, 15) which has a part acting as a connecting rod (15) serves as the arrangement for actuating the core (8) ;
   b) a movably arranged guide part (10) is provided, which is in operative connection with the crank drive (21, 17, 15) by way of a pivot joint ;
   c) the guide part (10) is guided in a housing aperture (7) of the displacement sensor ;
   d) the core (8) and the guide part (10) are in operative connection so that the core (8) is movable by the guide part (10) or by the pivot joint in the direction of its longitudinal axis.

2. A displacement sensor according to claim 1, characterized in that an axle (11) that is mounted in the guide part (10) serves as the pivot joint between the guide part (10) and the part of the crank drive (21, 17, 15) acting as a connecting rod (15).

3. A displacement sensor according to claim 2, characterized in that the core (8) and the part of the crank drive (21, 17, 15) acting as a connecting rod (15) are flexibly connected with one another by way of the axle (11).

4. A displacement sensor according to at least one of the preceding claims, characterized in that the guide part (10) has an aperture (9) extending in the direction of the longitudinal axis of the core (8) for receiving the core (8).

5. A displacement sensor according to claim 1, characterized in that the crank drive consists of a rotationally symmetric body (21), an eccentrically arranged journal (17) on the end face (32) of the rotationally symmetric body (21) located inside the housing of the displacement sensor, and a connecting rod (15) pivotally mounted on the journal (17).

6. A displacement sensor according to claim 3, characterized by the following features :

a) both the one end of the connecting rod (15) and the end of the core (8) facing the connecting rod (15) are pivotally mounted on the axle (11) connecting the core (8) to the connecting rod (15) ;

b) in or on the guide part (10) there are provided two bearings (12, 29) for mounting the axle (11) arranged transversely to the longitudinal axis of the connecting rod (15) or of the core (8).

7. A displacement sensor according to at least one of the preceding claims 2, 3 or 6, characterized in that the bearings (12, 29) for the axle (11) are constructed as slot-shaped apertures extending in the direction of the longitudinal axis of the guide part (10).

8. A displacement sensor according to at least one of the preceding claims 2, 3 or 6, characterized in that a spring (5) that urges the guide part (10) towards the axle (11) is provided.

9. A displacement sensor according to claim 1, characterized in that on its side facing the connecting rod (15) the guide part (10) has a projection (35) which lies on a part of the core (8) constructed as a bearing eye (36).

10. A displacement sensor according to at least one of the preceding claims, characterized in that the end of the connecting rod (15) facing the guide part (10) is of spherical construction, and as bearing for the spherically constructed part of the connecting rod (15) a shell-shaped recess is provided in the guide part (10).

11. A displacement sensor according to claim 1, characterized by the following features :

a) the guide part (10) is in operative connection with the connecting rod (15) by way of a pivot joint ;

b) with its end facing the guide part the core (8) lies on the guide part (10) and is urged by a spring in the direction of the guide part (10).

## Revendications

1. Capteur de course comportant une bobine (3), un noyau (8) qui est disposé avec liberté de déplacement par rapport à bobine (3) et qui plonge dans un espace entouré par la bobine (3) ou dans un porte-bobine (2), ainsi que, pour le noyau (8), un dispositif de manoeuvre au moyen duquel le noyau (8) est déplacé selon la direction de son axe longitudinal en fonction du mouvement de rotation d'un arbre, étant précisé que le dispositif de manoeuvre est en liaison active d'une part avec l'arbre et d'autre part avec le noyau, caractérisé par les caractéristiques suivantes.

a) C'est un mécanisme bielle-manivelle (21, 17, 15), qui présente une partie agissant à la façon d'une bielle (15), qui sert de dispositif de manoeuvre pour le noyau (8).

b) Il est prévu une pièce de guidage (10) qui est disposée vers une pièce de guidage, elle-même mobile, qui est en liaison active avec le mécanisme bielle-manivelle (21, 17, 15) par l'intermédiaire d'une portée articulée.

c) La pièce de guidage (10) est guidée dans un logement (7) du capteur de course.

d) Le noyau (8) et la pièce de guidage (10) sont en liaison active de façon telle que le noyau (8) peut être déplacé dans la direction de son axe longitudinal par la pièce de guidage (10) ou par la portée articulée.

2. Capteur de course selon la revendication 1, caractérisé par le fait que c'est un axe (11), qui porte dans la pièce de guidage (10), qui sert de portée articulée entre la pièce de guidage (10) et la partie du mécanisme bielle-manivelle (21, 17, 15) qui agit à la façon d'une bielle (15).

3. Capteur de course selon la revendication 2, caractérisé par le fait que le noyau (8) et la partie du mécanisme bielle-manivelle (21, 17, 15) qui agit à la façon d'une bielle (15) sont réunis l'un à l'autre, avec articulation, par l'intermédiaire de l'axe (11).

4. Capteur de course selon au moins l'une des revendications précédentes, caractérisé par le fait que la pièce de guidage (10) présente, pour recevoir le noyau (8), un évidement (9) orienté dans la direction de l'axe longitudinal du noyau (10).

5. Capteur de course selon la revendication 1, caractérisé par le fait que le mécanisme bielle-manivelle est constitué d'un corps en symétrie de rotation (21), d'un maneton (17) disposé excentriquement sur la face frontale (32), située à l'intérieur du boîtier du capteur de course, du corps en symétrie de rotation (21), et d'une bielle (15) qui porte, avec liberté de basculement, sur le maneton (17).

6. Capteur de course selon la revendication 3, caractérisé par les caractéristiques suivantes :

a) aussi bien l'une des extrémités de la bielle (15) que l'extrémité du noyau (8) située du côté de la bielle (15) portent, avec liberté de basculement, sur l'axe (11) qui relie le noyau (8) à la bielle (15);

b) dans, ou sur, la pièce de guidage (10) sont prévues deux portées (12, 29) pour porter l'axe disposé transversalement à l'axe longitudinal de la bielle (15) ou du noyau (8).

7. Capteur de course selon au moins l'une des revendications précédentes 2, 3 ou 6, caractérisé par le fait que les portées (12, 29) prévues pour l'axe sont conçues sous forme d'évidements en forme de fente orientés dans la direction de l'axe longitudinal de la pièce de guidage (10).

8. Capteur de course selon au moins l'une des revendications précédentes 2, 3 ou 6, caractérisé par le fait qu'il est prévu un ressort (5) qui contraint la pièce de guidage (10) dans la direction de la l'axe (11)

9. Capteur de course selon la revendication 1, caractérisé par le fait que la pièce de guidage (10) présente, sur sa face orientée vers la bielle (15), une saillie (35) qui repose sur une partie du noyau (8) conçue en forme d'oeillet (36).

10. Capteur de course selon au moins l'une des revendications précédentes, caractérisé par le fait que l'extrémité de la bielle (15) orientée vers la pièce de guidage (10) a la forme d'une sphère et par le fait que, comme portée pour la partie de la bielle (15) en forme de sphère est prévu un évidement en forme de coupe dans la pièce de guidage (10).

11. Capteur de course selon la revendication 1, caractérisé par les caractéristiques suivantes :

    a) la pièce de guidage (10) est en liaison active avec la bielle (15) par l'intermédiaire d'une portée articulée.

    b) le noyau (8) repose sur la pièce de guidage (10) par son extrémité orientée vers la pièce de guidage et il est contraint par un ressort en direction de la pièce de guidage (10).